# EUROPEAN PATENT SPECIFICATION

(11) **EP 4 470 795 B1**
(45) Date of publication and mention of the grant of the patent: **28.01.2026**
(21) Application number: 23175895.4
(22) Date of filing: 29.05.2023
(51) Int. Cl.: B60C 11/03, B60C 3/04, B60C 11/00

(54) **PNEUMATIC TYRE OF RUBBER MATERIAL FOR FORESTRY VEHICLES**
LUFTREIFEN AUS GUMMIMATERIAL FÜR FORSTFAHRZEUGE
BANDAGE PNEUMATIQUE EN CAOUTCHOUC POUR VÉHICULES FORESTIERS

(43) Date of publication of application: 04.12.2024
(73) Proprietor: Nokian Raskaat Renkaat Oy, 37101 Nokia (FI)
(72) Inventor: VAINIONPÄÄ, Teemu, 37101 Nokia (FI)
(74) Representative: Berggren Oy

(56) References cited:
- JP-A- 2008 114 756
- JP-U- H0 632 110
- US-A- 3 939 890
- US-A- 4 222 424

## Description

### Field of the invention

The invention to be presented relates to a pneumatic tyre of rubber material for forestry vehicles.

### Background of the invention

Pneumatic tyres applied in forestry, especially in heavy forestry vehicles and equipment, are used in off-road conditions on varying terrains that are hard or soft. Additionally, the terrain may be covered by low plant populations and its soil surface covers root systems of trees.

Ground pressure is the pressure exerted on the ground by the tyres of the forestry vehicle or equipment. An average ground pressure can be calculated, for example, by dividing the weight of the forestry vehicle or equipment by the ground-engaging contact area provided by the tyres.

The mobility of the forestry vehicle or equipment improves with the decreasing average ground pressure of the forestry vehicle or equipment, especially on the soft terrain. Especially, the tyres dig less into the ground. Additionally, the plant populations and the root systems are subject to less damages caused by the tyres when the ground pressure decreases.

A pneumatic tyre suitable for forestry use and applied in forestry vehicles is shown in EP 3412475 A1. Other pneumatic tyres for forestry use are known from EP 3738791 A1 and EP 3925867 A1.

Publication US 4,222,424 A, presenting the closest prior art, discloses a lug tyre for agricultural machines and constructional vehicles provided with at least one discontinuous portion formed by decreasing a thickness of a base rubber at both end regions of a tread and arranged along the circumferential direction of the tyre.

Publications JP 2008 114756 A and JP H06 32110 U disclose tyres for agricultural machines.

### Brief summary of the invention solution

The pneumatic tyre of rubber material for forestry vehicles according to the invention is presented in claim 1.

A method for manufacturing a pneumatic tyre of rubber material for forestry vehicles is represented in claim 15.

The present invention provides several advantages.

According to the invention, the shapes of the ground-engaging tread section of the tyre and its tread surface do not follow a rounded shape as closely as in other prior art tyres for forestry use but, when compared to the prior art tyres, there is significantly more rubber material in the shoulder regions of the tyre. The framework of the tyre is constituted by the carcass of the tyre that may follow its traditional, rounded shape. Thus, at the shoulder region of the tyre, the distance of the tread surface of the tyre from the carcass of the tyre, measured in a direction perpendicular to the carcass, may be more than twice the same distance at the centre region of the tyre.

According to the invention, when inflated, the shape of the tyre is more box-like compared to other prior art tyres and thus, the ground pressure is more uniform across the tread section of the tyre. The surface area of the tyre in contact with the ground is larger with improved contact with the ground. The tyre of the invention is able to exploit operating pressures that are lower than the commonly used tyre pressures.

According to the invention, the tyre is preferably a cross-ply tyre. When inflated, the shape of the tyre is closer to radial-ply tires than to prior art cross-ply tyres.

The tyre of the invention is optimized for off-road use and for forestry vehicles.

The forestry vehicle or equipment is, for example, a wheeled feller for felling trees, a wheeled forest harvester for felling trees and processing tree trunks, a wheeled forwarder for collecting and transporting logs and timber, or a wheeled skidder for pulling felled trees. The forestry vehicle or equipment is adapted to operate on varying terrains.

### Description of the drawings

The presented solution will be described in greater detail in the following, with reference to the accompanying drawings.
Figure 1 shows a tyre according to the presented invention.
Figure 2 shows an arrangement of raised portions in the tread section of the tyre shown in Fig. 1, as seen from above the tread section.
Figure 3 shows a cross-section of the tyre shown in Fig. 1.
Figure 4 shows a detail of the cross-section of the tyre shown in Fig. 3 at the location of the tread section of the tyre.

### Detailed description of the invention

The presented invention relates to a pneumatic tyre 100 which is made of rubber material and suitable for use in forestry, especially in forestry vehicles and equipment.

The tyre 100 is adapted to be in contact with the ground surface. The tyre 100 is to be filled with a gas, such as air, e.g. by means of an inner tube or without it. A ground-engaging tread section 10 is provided on the circumference of the tyre 100 and constitutes an endless surface in a circumferential direction C of the tyre 100, making it possible for the tyre 100 to roll forward.

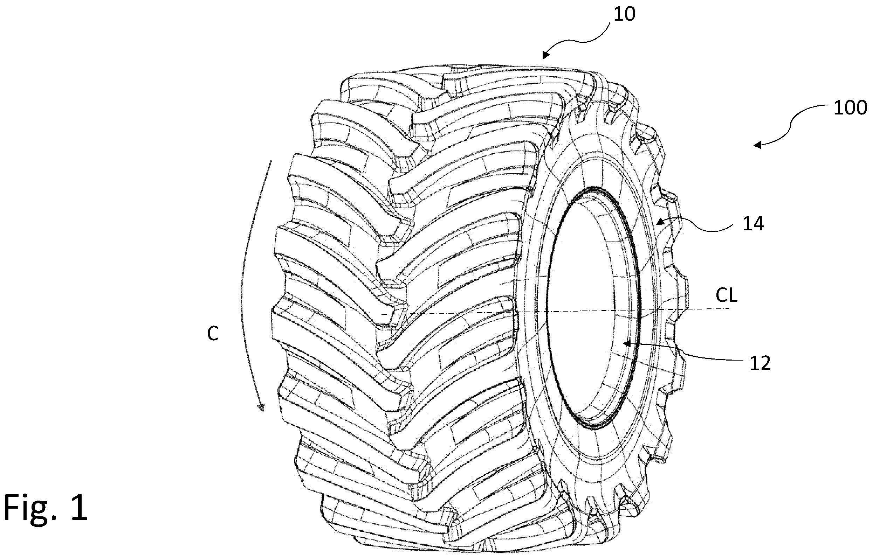

With reference to Figs. 1 to 4, the tyre 100 comprises the ground-engaging tread section 10, a pair of bead sections 12, and a pair of sidewall sections 14.

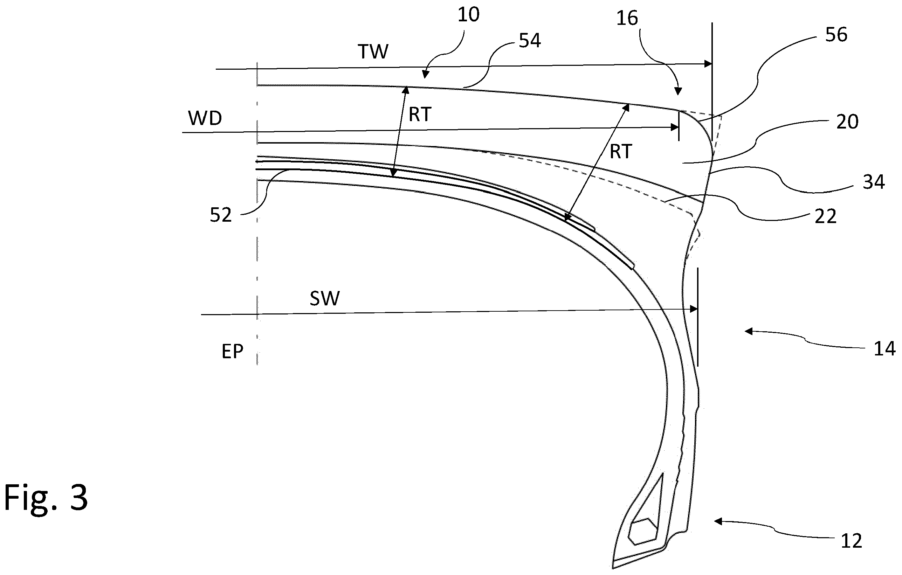

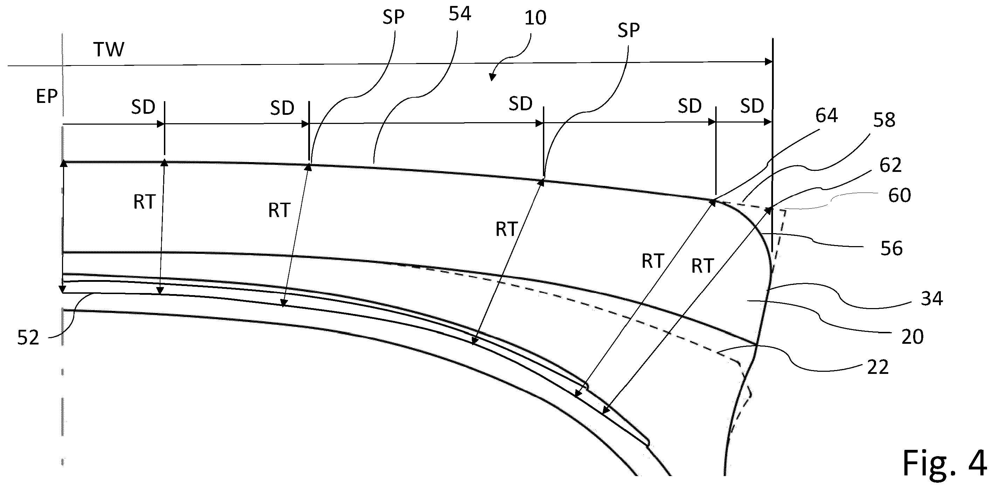

The tyre 100 when uninflated and separated from a wheel rim, exhibits the cross-sectional shape as shown in Figs. 3 and 4. The typical operating pressure for the tyre 100 according to the invention may be 6 bar (i.e. 600 kPa or 6 kN/m² or 87 psi) or lower.

The tread section 10 extends around the tyre 100 in the circumferential direction C, the tread section 10 defining an imaginary equatorial plane EP that is perpendicular to axial directions A and passes through a centre region 40 of the tread section 10.

The axial direction A refers to directions that extend from the equatorial plane EP and are parallel to the axis of rotation CL of the tyre, i.e. a centreline CL defined by the circular shape of the tyre 100. The equatorial plane EP refers to a plane perpendicular to the axis of rotation CL and passing through the centre region 40, preferably the centre of the tread section 10.

The bead sections 12 are located on two opposite sides of the tyre 100. Preferably, the bead sections 12 are adapted to secure the tyre 100 to the wheel rim.

The sidewall sections 14 are located on two opposite sides of the tyre 100. Each sidewall section 14 extends between the respective bead section 12 and the tread section 10. The tread section 10 defines a pair of shoulder regions 16 at lateral extremes of the tread section 10, each shoulder region 16 being adjacent to the respective sidewall section 14.

The tread section 10 comprises a tread design including raised portions of the tread, for example ribs, lugs, blocks, or combinations of two or more of these, the raised portions being separated by grooves.

A tread width TW constituting an overall width for the tread section 10 in the axial direction A is defined by a pair of axially outermost shoulder surfaces 34 at the lateral extremes of the tread section 10. For example, the tread width TW is preferably measured at an axially outermost point that is on the shoulder surface 34 or alternatively, at a point at an axially outermost edge of a chamfer or rounding 56 that is between the tread section 10 and the shoulder surface 34. These points correspond to each other in the example shown in Fig. 4. Alternatively, the tread width TW is measured at an axially outermost edge of the tread section 10, especially in a case in which there are no chamfers or roundings. This point is repesented by a point 60 shown in Fig. 4, to which a tread surface 54 of the tread section 10 may extend according to an example.

According to a preferred example, the axially outermost shoulder surface 34 and the lateral extreme of the tread section 10 are defined by raised portions of the tread, e.g. lugs 20.

A sidewall width SW of the tyre 100 in the axial direction A is defined by lateral extremes of the pair of sidewall sections 14. Preferably, the sidewall section 14 extends to the shoulder surface 34.

According to an example, the sidewall width SW is at all points of the sidewall 14 or mostly less than the tread width TW. For example, the ratio of the tread width TW to the sidewall width SW is from 1:1 to 1.2:1, i.e. 1.0, or more than 1.0. In such a case, the sidewall section 14 may constitute a rounding and/or a concave surface extending to the shoulder surface 34.

According to another example, the ratio of the tread width TW to the sidewall width SW is from 0.8:1 to 1:1, i.e. 1.0, or less than 1.0.

The tyre 100 further comprises a carcass 52 that is located radially inwards of the tread section 10. The carcass 52 constitutes a frame of the tyre 100 and may include a plurality of plies made of cords or threads. Preferably, the plies are arranged diagonally and cross each other to constitute a cross-ply tyre (i.e. a bias tyre). According to another example, the plies are arranged parallel to each other across the tyre 100 to constitute a radial-ply tyre (i.e. a radial tyre).

The cross-ply tyre may include a reinforcing breaker ply, e.g. a fabric or steel material, on the plies of the carcass 52 under the tread section 10. The radial-ply tyre may include a rigid belt between the tread section 10 and the carcass 52. The tyre 100 may further comprise an inner liner that is located radially inwards of the carcass 52, inside the tyre 100.

The carcass 52 defines a toroidal shape extending between the bead sections 12. Beneath the tread section 10, with reference to Figs. 3 and 4, the carcass 52 constitutes a convex shape in cross-section, i.e. on a plane that extends in the axial direction A and radially from the axis of rotation CL, the carcass 52 extending symmetrically and axially in equal amounts on both sides of the equatorial plane EP. The convex shape bulges outwards radially and in relation to the axis of rotation CL.

According to an example, the radius of curvature of the convex shape of the carcass 52 decreases with increasing distance from the equatorial plane EP.

The tread section 10 comprises the tread surface 54 that is ground-engaging and radially outermost, and with reference to Figs. 3 and 4, constitutes a convex shape in cross-section, i.e. on the plane that extends in the axial direction A and radially from the axis of rotation CL, the tread surface 54 extending symmetrically and axially in equal amounts on both sides of the equatorial plane EP. The convex shape bulges outwards radially and in relation to the axis of rotation CL. In the centre region 40, the convex shape may include a section with a substantially straight shape or a shape with a radius of curvature noticeably larger than the rest of the convex shape.

According to an example, the radius of curvature of the convex shape of the tread surface 54 decreases with the increasing distance from the equatorial plane EP.

According to a preferred example, the convex shape of the tread surface 54 gradually diverges from the convex shape of the carcass 52 when, in the axial direction A, its distance from the equatorial plane EP increases.

The convex shapes diverge in the axial direction A. The convex shapes may continually diverge within a width WD that is defined by points that are on the tread surface 54 on both sides of the equatorial plane EP. For example, with reference to Fig. 4, the width WD is measured at the above outermost edge of the tread section 10 or at an axially innermost edge of a chamfer or rounding 56 that is between the tread section 10 and the shoulder surface 34. This point is represented by a point 64 shown in Fig. 4, to which point the tread surface 54 extends.

As an alternative to the example above, in the centre region 40 within a distance from the equatorial plane EP, the convex shapes may be parallel to each other, the distance being 25% or 33% of the width WD.

According to an example, the tread section 10 comprises at least in the shoulder regions 16 the lugs 20 between which grooves 38 extend laterally, across or at an angle to the circumferential direction C.

According to an example, the lugs 20 extend at an angle differing from the above plane in such a way that the convex shape of the tread surface 54 is discontinued in the cross-sectional views of Figs. 3 and 4. In that situation, the convex shape of the tread surface 54 is projected or mapped onto the above plane such that the convex shape is continuous in Figs. 3 and 4. When projecting or mapping, the radial distance of the convex shape in relation to the axis of rotation CL is maintained. The dimensions depicted in this disclosure relate to the above plane unless otherwise stated.

The groove 38 defines a groove bottom 22 that according to an example extends to the sidewall section 14. According to an example, the groove bottom 22 constitutes a shape that is convex in cross-section, on the plane that extends in the axial direction A and radially from the axis of rotation CL, the groove bottom 22 extending on both sides of the equatorial plane EP, at least in the shoulder region 16. The shape of the groove bottom 22 bulges outwards radially and in relation to the axis of rotation CL.

According to a preferred example, the shape of the groove bottom 22 gradually diverges from the convex shape of the carcass 52 when, in the axial direction A, its distance from the equatorial plane EP increases.

According to an example, the shape of the groove bottom 22 is at a distance from and follows the convex shape of the tread surface 54, the shapes being substantially parallel.

The distance of the convex shape of the tread surface 54 from the convex shape of the carcass 52, in the above-mentioned plane, defines the thickness of and the amount of rubber material forming the tread section 10 and/or the lugs 20 of the tread section 10 defining the tread surface 54.

With the above increasing distance related to the diverging convex shapes, the thickness of the rubber material continually increases in the axial direction A.

The gradual change in the thickness of the rubber material may be defined by distances RT between the convex shape of the carcass 52 and the convex shape of the tread surface 54 in a direction normal or perpendicular to the convex shape of the carcass 52.

According to an example, the thickness of the rubber material is defined by the distances RT at selected distances SD from the equatorial plane EP within the tread width TW. The selected distances SD define selected points SP along the convex shape of the tread surface 54, the selected points SP being on the tread surface 54. Each selected distance SD is measured in the axial direction A.

The selected distance SD at its maximum is defined by the above point defining the overall tread width TW. Therefore, the selected distance SD at its maximum is 50% of the overall tread width TW. In the examples below and with reference to Fig. 4, the overall tread width TW is defined by the axially outermost shoulder surface 34 at the lateral extreme of the tread section 10.

The selected distances SD may be presented in such a manner that each selected distance SD relating to one of the selected points SP is represented by a percentage of or a fraction of the maximum selected distance SD. Thus, the selected distance SD representing a point at the maximum selected distance SD is represented by "1.00" or "100%", and the selected point SP on the equatorial plane EP relates to the selected distance SD represented by "0.00" or "0%". The selected distance SD starting at the equatorial plane EP and extending halfway across the tread section 10 in the axial direction A is represented by "0.50" or "50%".

The thickness of the rubber material and the distances RT are measured along straight lines each extending in the direction normal or perpendicular to the convex shape of the carcass 52, each line extending through one of the selected points SP.

The thickness of the rubber material and the distance RT at each selected point SP may be represented as a ratio of the thickness at the selected point SP to the thickness at the selected point SP that is on the equatorial plane EP and represents the selected distance SD of "0%". The absolute value of the thickness and the distance RT at the selected distance SD of "0%" may be represented by "1.00" or "100%". The thickness and the distance RT may increase with the increasing selected distance SD and therefore, the thickness expressed by means of the above ratio may increase above "1.00" or "100%".

With reference to Figs. 3 and 4, according to a preferred example, the thickness of the rubber material, as defined above, is selected for the tyre 100 in the following manner:
- at the selected distance SD of "0.00", the thickness is defined as 100% and constitutes a reference;
- at the selected distance SD of "0.67", the thickness is from 118% to 167%, or preferably from 130% to 155%, or more preferably from 138% to 151%, or is targeting 141%; and
- at the selected distance SD of "0.83", the thickness is from 144% to 203%, or preferably from 157% to 187%, or more preferably from 169% to 182%, or is targeting 172%.

In the above preferred example, the thickness of the rubber material in the shoulder region 16 may be almost double the thickness in the centre region 40.

In the examples above and below in relation to the thickness of the rubber material, the first and second ranges take into consideration typical and preferred embodiments of the tyre 100 according to the presented solution and the third range takes into consideration one prederred embodiment of the tyre 100 with reasonable manufacturing tolerances.

Additionally, according to an example and with reference to the example in Fig. 4, the thickness of the rubber material, as defined above, is selected for the tyre 100 in the following manner:
- at the selected distance SD of "0.91", the thickness is from 160% to 225%, or preferably from 173% to 208%, or more preferably from 187% to 202%, or is targeting 191%.

In the above example, the thickness of the rubber material in the shoulder region 16 may be twice the thickness in the centre region 40.

Additionally, with reference to the example in Fig. 4, when there is the chamfer or rounding 56 between the tread section 10 and the shoulder surface 34, the selected point SP at the selected distance SD of "1.00" is represented by an imaginary point 62 that is above the chamfer or rounding 56 at the location in which an imaginary extension 58 of the convex shape of the tread surface 54 reaches the selected distance SD of "1.00". The imaginary extension 58 implements the curvature defined by the convex shape of the tread surface 54.

Therefore, in the example of Fig. 4, at the selected distance SD of "1.00", the thickness of the rubber material may be from 180% to 258%, or preferably from 196% to 234%, or more preferably from 211% to 227%, or is targeting 215%.

In this example, the thickness represents the maximum thickness of the rubber material that can be approached depending on the size of the chamfer or rounding 56, e.g. its radius of curvature, selected for the tyre 100. In the example, the thickness of the rubber material in the shoulder region 16 may be twice the thickness in the centre region 40 or more.

Additionally, with reference to the example in Fig. 4 and relating to the convex shape of the tread surface 54 and the convex shape of the carcass 52 in the centre region 40, as explained above, the thickness of the rubber material, as defined above, may preferably be selected for the tyre 100 in the following manner:
- at the selected distance SD of "0.17", the thickness is from 95% to 120%, or preferably 97% to 115%, or more preferably 99% to 110%, or is targeting 102%; and/or
- at the selected distance SD of "0.33", the thickness is from 100% to 124%, or preferably from 103% to 120%, or more preferably from 105% to 116%, or is targeting 108%; and/or
- at the selected distance SD of "0.50", the thickness is from 105% to 124%, or preferably from 112% to 131%, or more preferably from 117% to 129%, or is targeting 120%.

In the above example parallel, straight, or convex shapes in the centre region, possibly with a large radius of curvature, are enabled.

According to an example, the distance of the convex shape of the groove bottom 22 from the convex shape of the carcass 52, in the above-mentioned plane, defines the thickness of and the amount of rubber material at the grooves 38 between the lugs 20. The thickness and the distance are measured along the straight lines explained above, each line extending through one of the selected points SP.

With reference to Figs. 3 and 4, according to a preferred example, the thickness at the groove 38, as defined above, may be selected for the tyre 100 in the following manner:
- at the selected distance SD of "0.00", the thickness is from 19% to 35%, or preferably from 21% to 33%, of the distance RT at the corresponding selected point SP; and/or
- at the selected distance SD of "0.67", the thickness is from 26% to 44%, or preferably from 28% to 41%, of the distance RT at the corresponding selected point SP; and/or
- at the selected distance SD of "0.83", the thickness is from 33% to 51%, or preferably from 35% to 48%, of the distance RT at the correspond corresponding point SP; and/or
- at the selected distance SD of "0.91", the thickness is from 31% to 50%, or preferably from 32% to 47%, of the distance RT at the correspond corresponding point SP.

Additionally, with reference to the example in Fig. 4 as explained above in relation to the imaginary point 60, when there is the chamfer or rounding 56 between the tread section 10 and the shoulder surface 34, at the selected distance SD of "1.00", the thickness of the rubber material at the groove 38 may be from 33% to 52%, or preferably from 34% to 50%, of the distance RT at the corresponding selected point SP. In this example, the thickness relates to the actual thickness of the rubber material.

According to an example, the chamfer or rounding 56 begins at the selected distance SD of "0.91" or between "0.91" and "1.00".

Additionally, with reference to the example in Fig. 4 and relating to the convex shape of the tread surface 54 and the convex shape of the carcass 52 in the centre region 40, as explained above, at the selected distance SD of "0.17", the thickness of the rubber material at the groove 38 may preferably be selected for the tyre 100 in the following manner:
- at the selected distance SD of "0.17", the thickness is from 19% to 34%, or preferably from 21% to 32%, of the distance RT at the corresponding selected point SP; and/or
- at the selected distance SD of "0.33", the thickness is from 24% to 39%, or preferably from 26% to 37%, of the distance RT at the corresponding selected point SP; and/or
- at the selected distance SD of "0.50", the thickness is from 27% to 42%, or preferably from 29% to 41%, of the distance RT at the correspond corresponding point SP.

According to an example, the thickness of the rubber material and the distance RT at the selected distance SD of "0.00" is 50 mm to 100 mm, or more preferably 60mm to 75mm.

According to an example, the diameter of the tyre 100 in the equatorial plane EP is 1340 mm to 1525 mm. According to an example, the tread width TW and/or the sidewall width SW is 700 mm to 900 mm.

According to an example, the nominal section width is 750 mm, the aspect ratio is 55 percent, and the rim diameter is 26.5 inches. According to another example, the nominal section width is 710 mm, the aspect ratio is 45 percent, and the rim diameter is 26.5 inches.

According to an example, the radius of curvature of the convex shape of the carcass 52 is 500 mm to 800 mm in the centre region 40, the radius of curvature decreasing with the increasing distance from the equatorial plane EP.

According to an example, the radius of curvature of the convex shape of the tread surface 54 is 2000 mm to 2600 mm at least in the centre region 40.

According to an example, the radius of curvature of the shape of the groove bottom 22 is 1200 mm to 1600 mm in the centre region 40, the radius of curvature decreasing with the increasing distance from the equatorial plane EP.

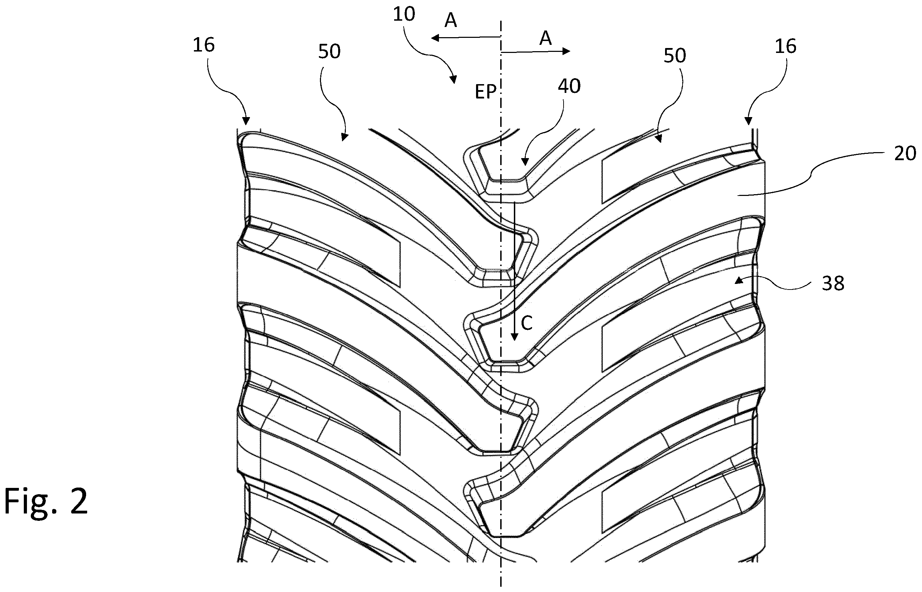

With reference to the example in Figs. 1 and 2, the tread section 10 comprises a lug row 50 on both sides of the equatorial plane EP, each lug row 50 including lugs 20 and extending in the circumferential direction C. Each lug row 50 comprises a series of lugs 20 that are spaced along the circumferential direction C and define grooves 38 located between the lugs 20 and defining a groove bottom 22 (see Fig. 4). According to an example, the groove bottom 22 extends to the sidewall section 14.

The lugs 20 extend radially from the level of the groove bottom 22.

According to an example, each lug 20 is oriented obliquely with respect to the circumferential direction C. The lug 20 extends obliquely with respect to the axial direction A from the centre region 40 to the shoulder region 16.

According to an example, in the shoulder region 16, the lug 20 includes a branch that is connected to the lug 20 or separated from the lug 20 by a shallow groove. Additionally, a groove 38 may separate the branch and the trunk of the lug 20. The shallow groove or the separating groove 38 may extend to the sidewall section 14.

According to an example, the lugs 20 extend towards or to the centre region 40. Additionally, according to a further example, the lugs 20 may extend across the equatorial plane EP.

According to an example, the lugs 20 constitute separate blocks encircled by the grooves 38 of the tread section 10. According to an example, the grooves 38 of the tread section 10 are connected to each other. Alternatively, according to an example, the lugs 20 are connected to each other in the centre region 40.

According to an example, see Figs 1 and 2, the lugs 20 alternate in the centre region 40 in such a way that every other lug 20 belongs to one of the lug rows 50 and every other lug 20 belongs to the other lug row 50.

According to an example, in the centre region 40, the lug 20 may include an end section directed in the axial direction A towards the opposite side of the tread section 10. According to another example, in the centre region 40, the tread section 10 may include one or more blocks as extensions of the lugs 20, the block being separated from the lug 20 by a shallow groove.

The depth of the shallow groove may be at the most 20% to 30% of the height of the lug 20 with respect to the groove bottom 22.

Preferably, in the tread section 10, the percentage of the area covered by the grooves 38 is at the most from 25% to 40% of the area covered by both the grooves 38 and the lugs 20. Preferably, the lug 20 is oriented obliquely at an angle of 30 degrees to 60 degrees with respect to the circumferential direction C.

Preferably, the centre region 40 covers in the axial direction A not more than 5% to 20% of the width of the tread section 10.

According to an example, as shown in Figs. 2 and 3, each lug 20 in addition to the axially outermost shoulder surface 34 comprises a radially outermost surface constituting the tread surface 54. The shoulder surface 34 is oriented transversally in relation to the tread surface 54.

The the tread surface 54 forms the top surface of the lug 20 and the shoulder surface 34 forms the end surface of the lug 20. The shoulder surface 34 may form an integral part of the surface of the sidewall section 14. According to an example, the shoulder surface 34 unites with the surface of the sidewall section 14 in a grooveless or seamless manner.

According to an example, as shown in Fig. 3, the shoulder surface 34 is separated from the tread surface 54 by an edge of the lug 20, by a chamber, or by a rounding, e.g. the chamfer or rounding 56.

The above-mentioned forestry vehicle may comprise a frame having two opposite sides and being wheeled for propulsion of the forestry vehicle. On each side of the frame, there may be two or more wheel assemblies each including a tyre. According to an example, a pair of wheel assemblies may be installed to a bogie axle assembly of the frame. The wheel assembly may comprise a wheel rim on which the tyre is installed and the wheel assembly is, e.g. by means of the wheel rim, connectable to the frame, e.g. to a wheel mount on the frame. The bogie axle assembly may include the wheel mount.

The frame of the forestry vehicle may be articulated. A cabin with an operator's station, an engine and an articulated boom may be attached to the frame. A tool for processing tree stems and/or handling logs may be attached to an end of the boom. The tool may be e.g. a felling head, a harvester head, or a timber grapple. The forestry vehicle may include a loading space supported on the frame for transporting logs.

It should also be understood that terminology employed herein is used for the purpose of describing particular examples only and is not intended to be limiting. Reference throughout this specification to "an example" means that a particular feature, structure, or characteristic described in connection with the example is included in at least one example of the present invention. Especially, in the examples above, when referring to a property of e.g. a single lug then all functionally corresponding lugs may include the same property.

The verbs "to comprise" and "to include" are used in this specification as open limitations that neither exclude nor require the existence of also un-recited features. Furthermore, it is to be understood that the use of "a" or "an", i.e. a singular form, throughout this document does not exclude a plurality, unless where specifically mentioned.

## Claims

1. A pneumatic tyre of rubber material for forestry vehicles, the tyre (100) comprising:
- a ground-engaging tread section (10) extending around the tyre in the circumferential direction (C) of the tyre, wherein the tread section defines an imaginary equatorial plane (EP) that is perpendicular to an axial direction (A) of the tyre and passes through a centre region (40) of the tread section, and wherein the tread section (10) applies a tread design including raised portions of the tread section (10) that are separated by grooves (38);
- a pair of shoulder regions (16) at the lateral extremes of the tread section (10) and including a pair axially outermost shoulder surfaces (34) defining, in the axial direction (A), an overall tread width (TW), wherein additionally a selected distance (SD) at its maximum in the axial direction (A) in relation to the equatorial plane (EP) is defined by the axially outermost shoulder surface (34);
- a carcass (52) within the rubber material, located radially inwards of the tread section (10), wherein the carcass (52) defines a convex shape in cross-section of the tyre, bulging radially outwards;
- a ground-engaging, radially outermost tread surface (54) included in the tread section (10), wherein the tread surface (54) defines a convex shape in cross-section of the tyre, bulging radially outwards;
- wherein a thickness of the rubber material forming the tread section (10) and a thickness of the rubber material at the groove (38) is defined at selected points (SP) on the tread surface (54), the selected points (SP) being, in the axial direction (A), at selected distances (SD) from the equatorial plane (EP), wherein the thickness at the tread section (10) is defined by distances (RT) between the convex shapes and the thickness at the groove (38) is defined as proportions of the distances (RT) between the convex shapes, both thicknesses being measured along imaginary lines each extending in a direction normal to the convex shape of the carcass (52) and via one of the selected points (SP);
- wherein, the thickness of the rubber material forming the tread section (10) is defined in the following manner:
- at a first selected distance (SD) at the equatorial plane (EP) at a first selected point (SP), the thickness is defined as 100%;
- at a selected distance (SD) of 67% of the maximum selected distance (SD), the thickness is defined as from 118% to 167% of the thickness at the first selected point (SP); and
- at a selected distance (SD) of 83% of the maximum selected distance (SD), the thickness is defined as from 144% to 203% of the thickness at the first selected point (SP); and
**characterized in that**:
- the thickness of the rubber material at the groove (38) is defined in the following manner:
- at the first selected distance (SD) the first selected point (SP), the thickness is from 19% to 35% of the thickness of the rubber material at the tread surface (54);
- at the selected distance (SD) of 67%, the thickness is from 26% to 44% of the thickness of the rubber material at the tread surface (54); and
- at the selected distance (SD) of 83%, the thickness is from 33% to 51% of the thickness of the rubber material at the tread surface (54).

2. The tyre according to claim 1, wherein
- the thickness of the rubber material forming the tread section (10) at a selected distance (SD) of 91% of the maximum selected distance (SD) is defined as from 160% to 225% of the thickness at the first selected point (SP); and
- the thickness of the rubber material at the groove (38) is from 31% to 50% of the thickness of the rubber material at the tread surface (54).

3. The tyre according to claim 1 or 2, wherein
- the thickness of the rubber material forming the tread section (10) at a selected distance (SD) of 100% of the maximum selected distance (SD) at a second selected point (SP) is defined as from 180% to 258% of the thickness at the first selected point (SP), and
- the second selected point (SP) is represented by an imaginary point (62) that is above a chamfer or rounding (56) at a location in which an imaginary extension (58) of the convex shape of the tread surface (54) reaches the maximum selected distance (SD).

4. The tyre according to claim 1, wherein the thickness of the rubber material forming the tread section (10) is defined in the following manner:
- at the selected distance (SD) of 67% of the maximum selected distance (SD), the thickness is defined as from 130% to 155%, or from 138% to 151%, of the thickness at the first selected point (SP); and
- at the selected distance (SD) of 83% of the maximum selected distance (SD), the thickness is defined as from 157% to 187%, or from 169% to 182%, of the thickness at the first selected point (SP).

5. The tyre according to claim 2, wherein the thickness of the rubber material forming the tread section (10) at the selected distance (SD) of 91% of the maximum selected distance (SD), the thickness is defined as from 173% to 208%, or from 187% to 202%, of the thickness at the first selected point (SP).

6. The tyre according to claim 3, wherein the thickness of the rubber material forming the tread section (10) at the selected distance (SD) of 100% of the maximum selected distance (SD) at a second selected point (SP), the thickness is defined as from 196% to 234%, or from 211% to 227%, of the thickness at the first selected point (SP).

7. The tyre according to any one of claims 1 to 6, wherein
- the thickness of the rubber material forming the tread section (10) is defined in the following manner:
- at a selected distance (SD) of 17% of the maximum selected distance (SD) the thickness is defined as from 95% to 120%, or 97% to 115%, or 99% to 110%, of the thickness at the first selected point (SP); and/or
- at a selected distance (SD) of 33% of the maximum selected distance (SD), the thickness is defined as from 100% to 124%, or from 103% to 120%, or from 105% to 116%, of the thickness at the first selected point (SP); and/or
- at a selected distance (SD) of 50% of the maximum selected distance (SD), the thickness is defined as from 105% to 124%, or from 112% to 131%, or from 117% to 129%, of the thickness at the first selected point (SP); and
- the thickness of the rubber material at the groove (38) is defined in the following manner:
- at the selected distance (SD) of 17%, the thickness is from 19% to 34% of the thickness of the rubber material at the tread surface (54); and
- at the selected distance (SD) of 33%, the thickness is from 24% to 39% of the thickness of the rubber material at the second selected point (SP); and
- at the selected distance (SD) of 50%, the thickness is from 27% to 42% of the thickness of the rubber material at the third selected point (SP).

8. The tyre according to any one of claims 1 to 7, wherein the thickness of the rubber material at the groove (38) is defined in the following manner:
- at the first selected distance (SD) the first selected point (SP), the thickness is from 21% to 33%, of the thickness of the rubber material at the tread surface (54); and/or
- at the selected distance (SD) of 17%, the thickness is from 21% to 32%, of the thickness of the rubber material at the tread surface (54); and/or
- at the selected distance (SD) of 33%, the thickness is from 26% to 37%, of the thickness of the rubber material at the second selected point (SP); and/or
- at the selected distance (SD) of 50%, the thickness is from 29% to 41%, of the thickness of the rubber material at the third selected point (SP); and/or
- at the selected distance (SD) of 67%, the thickness is from 28% to 41%, of the thickness of the rubber material at the tread surface (54) and/or;
- at the selected distance (SD) of 83%, the thickness is from 35% to 48%, of the thickness of the rubber material at the tread surface (54); and/or
- at the selected distance (SD) of 91%, the thickness is from 32% to 47%, of the thickness of the rubber material at the tread surface (54).

9. The tyre according to any one of claims 1 to 8, wherein, in the axial direction (A), the convex shape of the tread surface (54) gradually diverges from the convex shape of the carcass (52) when the distance to the equatorial plane (EP) increases.

10. The tyre according to any one of claims 1 to 9, wherein the tyre further comprises:
- a pair of bead sections (12) adapted to secure the tyre to a wheel rim, located on two opposite sides of the tyre; and
- a pair of sidewall sections (14), located on two opposite sides of the tyre, wherein each sidewall section extends between the respective bead section and the tread section,
- wherein a sidewall width (SW) of the tyre (100) in the axial direction (A) is defined by lateral extremes of the pair of sidewall sections (14), and wherein the ratio of the tread width (TW) to the sidewall width (SW) is more than 1.0.

11. The tyre according to any one of claims 1 to 10, wherein the thickness of the rubber material at the first selected point (SP) is 50 mm to 100 mm, or more preferably 60mm to 75mm, and/or the diameter of the tyre in the equatorial plane (EP) is 1340 mm to 1525 mm, and/or the tread width (TW) is 700 mm to 900 mm.

12. The tyre according to any one of claims 1 to 11, wherein the tyre (100) is a cross-ply tire.

13. The tyre according to any one of claims 1 to 12, wherein in the tyre:
- the tread section (10) includes at least in the shoulder region (16) raised portions in the form of lugs (20) between which the grooves (38) extend laterally, across or at an angle to the circumferential direction (C), the grooves (38) extending to the sidewall section (14);
- the lugs (20) extend to the centre region (40);
- the tread section comprises a lug row (50) on both sides of the equatorial plane (EP) and each lug row extends in the circumferential direction (C); and
- each lug row (50) comprises a series of the lugs (20) that are spaced along the circumferential direction and define the grooves (38) located between the lugs.

14. The tyre according to claim 13, wherein the lugs (20) alternate in the centre region (40) in such a way that every other lug is a lug of one of the lug rows (50) and every other lug is a lug of the other one of the lug rows.

15. A method for manufacturing a pneumatic tyre of rubber material for forestry vehicles, the tyre (100) comprising:
- a ground-engaging tread section (10) extending around the tyre in the circumferential direction (C) of the tyre, wherein the tread section defines an imaginary equatorial plane (EP) that is perpendicular to an axial direction (A) of the tyre and passes through a centre region (40) of the tread section, and wherein the tread section (10) applies a tread design including raised portions of the tread section (10) that are separated by grooves (38);
- a pair of shoulder regions (16) at the lateral extremes of the tread section (10) and including a pair axially outermost shoulder surfaces (34) defining, in the axial direction (A), an overall tread width (TW), wherein additionally a selected distance (SD) at its maximum in the axial direction (A) in relation to the equatorial plane (EP) is defined by the axially outermost shoulder surface (34);
- a carcass (52) within the rubber material, located radially inwards of the tread section (10), wherein the carcass (52) defines a convex shape in cross-section of the tyre, bulging radially outwards;
- a ground-engaging, radially outermost tread surface (54) included in the tread section (10), wherein the tread surface (54) defines a convex shape in cross-section of the tyre, bulging radially outwards;
wherein
the method comprises:
- forming the rubber material of the tread section (10) such that a thickness of the rubber material is defined at selected points (SP) on the tread surface (54), the selected points (SP) being, in the axial direction (A), at selected distances (SD) from the equatorial plane (EP), wherein the thickness is defined by distances (RT) between the convex shapes, measured along imaginary lines each extending in a direction normal to the convex shape of the carcass (52) and via one of the selected points (SP);
- wherein
- at a first selected distance (SD) at the equatorial plane (EP) at a first selected point (SP), the thickness is defined as 100%;
- at a selected distance (SD) of 67% of the maximum selected distance (SD), the thickness is defined as from 118% to 167%, or from 130% to 155%, or from 138% to 151%, of the thickness at the first selected point (SP); and
- at a selected distance (SD) of 83% of the maximum selected distance (SD), the thickness is defined as from 144% to 203%, or from 157% to 187%, or from 169% to 182%, of the thickness at the first selected point (SP);
the method being **characterized by**
- adapting the groove (38) to define a groove bottom (22) that defines a convex shape in cross-section of the tyre, the convex shape following the convex shape of the tread surface (54) at a distance, the convex shapes being substantially parallel.

## Patentansprüche

1. Pneumatischer Reifen aus Gummimaterial für forstwirtschaftliche Fahrzeuge, der Reifen (100) umfassend:
- einen bodenberührenden Laufflächenabschnitt (10), der sich in der Umfangsrichtung (C) des Reifens um den Reifen herum erstreckt, wobei der Laufflächenabschnitt eine imaginäre Äquatorialebene (EP) definiert, die senkrecht zu einer axialen Richtung (A) des Reifens ist und durch eine zentrale Region (40) des Laufflächenabschnitts verläuft, und wobei der Laufflächenabschnitt (10) ein Laufflächendesign anwendet, das erhabene Abschnitte des Laufflächenabschnitts (10) umfasst, die durch Rillen (38) getrennt sind;
- ein Paar Schulterregionen (16) an den seitlichen Enden des Laufflächenabschnitts (10), die ein Paar axial äußerster Schulteroberflächen (34) einschließen, die in der axialen Richtung (A) eine Gesamtlaufflächenbreite (TW) definieren, wobei zusätzlich ein ausgewählter Abstand (SD) an seinem Maximum in der axialen Richtung (A) in Bezug auf die Äquatorialebene (EP) durch die axial äußerste Schulteroberfläche (34) definiert ist;
- eine Karkasse (52) innerhalb des Gummimaterials, die sich radial innerhalb des Laufflächenabschnitts (10) befindet, wobei die Karkasse (52) im Querschnitt des Reifens eine konvexe Form definiert, die sich radial nach außen wölbt;
- eine in den Querschnitt des Reifens eingreifende, radial äußerste Laufflächenoberfläche (54), die in den Laufflächenabschnitt (10) eingeschlossen ist, wobei die Laufflächenoberfläche (54) eine konvexe Form im Querschnitt des Reifens definiert, die sich radial nach außen wölbt;
- wobei eine Dicke des Gummimaterials, das den Laufflächenabschnitt (10) bildet, und eine Dicke des Gummimaterials an der Rille (38) an ausgewählten Punkten (SP) auf der Laufflächenoberfläche (54) definiert ist, wobei die ausgewählten Punkte (SP) in der axialen Richtung (A) in ausgewählten Abständen (SD) von der Äquatorialebene (EP) liegen, wobei die Dicke am Laufflächenabschnitt (10) durch Abstände (RT) zwischen den konvexen Formen und die Dicke an der Rille (38) als Proportionen der Abstände (RT) zwischen den konvexen Formen definiert ist, wobei beide Dicken entlang imaginärer Linien gemessen werden, die sich jeweils in einer Richtung senkrecht zu der konvexen Form der Karkasse (52) und über einen der ausgewählten Punkte (SP) erstrecken;
- wobei die Dicke des den Laufflächenabschnitt (10) bildenden Gummimaterials auf folgende Weise definiert ist:
- bei einem ersten ausgewählten Abstand (SD) in der Äquatorialebene (EP) an einem ersten ausgewählten Punkt (SP) ist die Dicke als 100 % definiert;
- bei einem ausgewählten Abstand (SD) von 67 % des maximalen ausgewählten Abstands (SD) ist die Dicke als 118 % bis 167 % der Dicke am ersten ausgewählten Punkt (SP) definiert; und
- bei einem ausgewählten Abstand (SD) von 83 % des maximalen ausgewählten Abstands (SD) ist die Dicke als 144 % bis 203 % der Dicke am ersten ausgewählten Punkt (SP) definiert; und
**dadurch gekennzeichnet, dass:**
- die Dicke des Gummimaterials an der Rille (38) auf folgende Weise definiert ist:
- bei dem ersten ausgewählten Abstand (SD), dem ersten ausgewählten Punkt (SP), ist die Dicke zwischen 19 % und 35 % der Dicke des Gummimaterials an der Laufflächenoberfläche (54);
- bei dem ausgewählten Abstand (SD) von 67 % ist die Dicke zwischen 26 % und 44 % der Dicke des Gummimaterials an der Laufflächenoberfläche (54); und
- bei dem ausgewählten Abstand (SD) von 83 % ist die Dicke zwischen 33 % und 51 % der Dicke des Gummimaterials an der Laufflächenoberfläche (54).

2. Reifen nach Anspruch 1, wobei
- die Dicke des den Laufflächenabschnitt (10) bildenden Gummimaterials in einem ausgewählten Abstand (SD) von 91 % des maximalen ausgewählten Abstands (SD) als 160 % bis 225 % der Dicke am ersten ausgewählten Punkt (SP) definiert ist; und
- die Dicke des Gummimaterials an der Rille (38) zwischen 31 % und 50 % der Dicke des Gummimaterials an der Laufflächenoberfläche (54) ist.

3. Reifen nach Anspruch 1 oder 2, wobei
- die Dicke des den Laufflächenabschnitt (10) bildenden Gummimaterials in einem ausgewählten Abstand (SD) von 100 % des maximalen ausgewählten Abstands (SD) an einem zweiten ausgewählten Punkt (SP) als 180 % bis 258 % der Dicke am ersten ausgewählten Punkt (SP) definiert ist, und
- der zweite ausgewählte Punkt (SP) durch einen imaginären Punkt (62) repräsentiert wird, der sich oberhalb einer Fase oder Rundung (56) an einer Stelle befindet, an der eine imaginäre Ausdehnung (58) der konvexen Form der Laufflächenoberfläche (54) den maximalen ausgewählten Abstand (SD) erreicht.

4. Reifen nach Anspruch 1, wobei die Dicke des den Laufflächenabschnitt (10) bildenden Gummimaterials auf folgende Weise definiert ist:
- bei dem ausgewählten Abstand (SD) von 67 % des maximalen ausgewählten Abstands (SD) ist die Dicke als 130 % bis 155 % oder 138 % bis 151 % der Dicke am ersten ausgewählten Punkt (SP) definiert; und
- bei einem ausgewählten Abstand (SD) von 83 % des maximalen ausgewählten Abstands (SD) ist die Dicke definiert als 157 % bis 187 % oder 169 % bis 182 % der Dicke am ersten ausgewählten Punkt (SP).

5. Reifen nach Anspruch 2, wobei die Dicke des den Laufflächenabschnitt (10) bildenden Gummimaterials bei dem ausgewählten Abstand (SD) 91 % des maximalen ausgewählten Abstands (SD) ist, wobei die Dicke als 173 % bis 208 % oder 187 % bis 202 % der Dicke an dem ersten ausgewählten Punkt (SP) definiert ist.

6. Reifen nach Anspruch 3, wobei die Dicke des den Laufflächenabschnitt (10) bildenden Gummimaterials bei dem ausgewählten Abstand (SD) von 100 % des maximalen ausgewählten Abstands (SD) an einem zweiten ausgewählten Punkt (SP) als 196 % bis 234 % oder 211 % bis 227 % der Dicke an dem ersten ausgewählten Punkt (SP) definiert ist.

7. Reifen nach einem der Ansprüche 1 bis 6, wobei
- die Dicke des den Laufflächenabschnitt (10) bildenden Gummimaterials auf folgende Weise definiert ist:
- bei einem ausgewählten Abstand (SD) von 17 % des maximalen ausgewählten Abstands (SD) ist die Dicke definiert als 95 % bis 120 %, oder 97 % bis 115 %, oder 99 % bis 110 % der Dicke am ersten ausgewählten Punkt (SP); und/oder
- bei einem ausgewählten Abstand (SD) von 33 % des maximalen ausgewählten Abstands (SD) ist die Dicke definiert als 100 % bis 124 %, oder 103 % bis 120 %, oder 105 % bis 116 % der Dicke am ersten ausgewählten Punkt (SP); und/oder
- bei einem ausgewählten Abstand (SD) von 50 % des maximalen ausgewählten Abstands (SD) ist die Dicke definiert als 105 % bis 124 %, oder 112 % bis 131 %, oder 117 % bis 129 % der Dicke am ersten ausgewählten Punkt (SP); und
- die Dicke des Gummimaterials an der Rille (38) auf folgende Weise definiert ist:
- bei dem ausgewählten Abstand (SD) von 17 % ist die Dicke zwischen 19 % und 34 % der Dicke des Gummimaterials an der Laufflächenoberfläche (54); und
- bei dem ausgewählten Abstand (SD) von 33 % ist die Dicke 24 % bis 39 % der Dicke des Gummimaterials an dem zweiten ausgewählten Punkt (SP); und
- bei dem ausgewählten Abstand (SD) von 50 % ist die Dicke zwischen 27 % und 42 % der Dicke des Gummimaterials am dritten ausgewählten Punkt (SP).

8. Reifen nach einem der Ansprüche 1 bis 7, wobei die Dicke des Gummimaterials an der Rille (38) auf folgende Weise definiert ist:
- bei dem ersten ausgewählten Abstand (SD), dem ersten ausgewählten Punkt (SP), ist die Dicke zwischen 21 % und 33 % der Dicke des Gummimaterials an der Laufflächenoberfläche (54); und/oder
- bei dem ausgewählten Abstand (SD) von 17% ist die Dicke zwischen 21 % und 32 % der Dicke des Gummimaterials an der Laufflächenoberfläche (54); und/oder
- bei dem ausgewählten Abstand (SD) von 33 % ist die Dicke 26 % bis 37 % der Dicke des Gummimaterials an dem zweiten ausgewählten Punkt (SP); und/oder
- bei dem ausgewählten Abstand (SD) von 50 % ist die Dicke 29 % bis 41 % der Dicke des Gummimaterials an dem dritten ausgewählten Punkt (SP); und/oder
- bei dem ausgewählten Abstand (SD) von 67% ist die Dicke zwischen 28 % und 41 % der Dicke des Gummimaterials an der Laufflächenoberfläche (54) und/oder;
- bei dem ausgewählten Abstand (SD) von 83% ist die Dicke zwischen 35 % und 48 % der Dicke des Gummimaterials an der Laufflächenoberfläche (54); und/oder
- bei dem ausgewählten Abstand (SD) von 91 % ist die Dicke zwischen 32 % und 47 % der Dicke des Gummimaterials an der Laufflächenoberfläche (54).

9. Reifen nach einem der Ansprüche 1 bis 8, wobei die konvexe Form der Laufflächenoberfläche (54) in axialer Richtung (A) allmählich von der konvexen Form der Karkasse (52) abweicht, wenn der Abstand zur Äquatorialebene (EP) zunimmt.

10. Reifen nach einem der Ansprüche 1 bis 9, wobei der Reifen ferner Folgendes umfasst:
- ein Paar Wulstabschnitte (12), die zur Befestigung des Reifens an einer Radfelge geeignet sind und sich an zwei gegenüberliegenden Seiten des Reifens befinden; und
- ein Paar von Seitenwandabschnitten (14), die sich auf zwei gegenüberliegenden Seiten des Reifens befinden, wobei sich jeder Seitenwandabschnitt zwischen dem jeweiligen Wulstabschnitt und dem Laufflächenabschnitt erstreckt,
- wobei eine Seitenwandbreite (SW) des Reifens (100) in der axialen Richtung (A) durch die seitlichen Enden des Paares von Seitenwandabschnitten (14) definiert ist, und wobei das Verhältnis der Laufflächenbreite (TW) zur Seitenwandbreite (SW) mehr als 1,0 ist.

11. Reifen nach einem der Ansprüche 1 bis 10, wobei die Dicke des Gummimaterials an dem ersten ausgewählten Punkt (SP) 50 mm bis 100 mm oder vorzugsweise 60 mm bis 75 mm ist, und/oder der Durchmesser des Reifens in der Äquatorialebene (EP) 1340 mm bis 1525 mm ist, und/oder die Laufflächenbreite (TW) 700 mm bis 900 mm ist.

12. Reifen nach einem der Ansprüche 1 bis 11, wobei der Reifen (100) ein Diagonalreifen ist.

13. Reifen nach einem der Ansprüche 1 bis 12, wobei in dem Reifen:
- der Laufflächenabschnitt (10) mindestens in der Schulterregion (16) erhabene Abschnitte in Form von Stollen (20) einschließt, zwischen denen sich die Rillen (38) seitlich, quer oder in einem Winkel zur Umfangsrichtung (C) erstrecken, wobei die Rillen (38) bis zum Seitenwandabschnitt (14) reichen;
- die Stollen (20) bis zur mittleren Region (40) reichen;
- der Laufflächenabschnitt eine Stollenreihe (50) auf beiden Seiten der Äquatorialebene (EP) umfasst und sich jede Stollenreihe in der Umfangsrichtung (C) erstreckt; und
- jede Stollenreihe (50) eine Reihe von Stollen (20) umfasst, die entlang der Umfangsrichtung beabstandet sind und die zwischen den Stollen befindlichen Nuten (38) definieren.

14. Reifen nach Anspruch 13, wobei sich die Stollen (20) in der mittleren Region (40) so abwechseln, dass jeder zweite Stollen ein Stollen einer der Stollenreihen (50) und jeder zweite Stollen ein Stollen der anderen Stollenreihe ist.

15. Verfahren zur Herstellung eines pneumatischen Reifens aus Gummimaterial für forstwirtschaftliche Fahrzeuge, der Reifen (100) umfassend:
- einen bodenberührenden Laufflächenabschnitt (10), der sich in der Umfangsrichtung (C) des Reifens um den Reifen herum erstreckt, wobei der Laufflächenabschnitt eine imaginäre Äquatorialebene (EP) definiert, die senkrecht zu einer axialen Richtung (A) des Reifens ist und durch eine zentrale Region (40) des Laufflächenabschnitts verläuft, und wobei der Laufflächenabschnitt (10) ein Laufflächendesign anwendet, das erhabene Abschnitte des Laufflächenabschnitts (10) umfasst, die durch Rillen (38) getrennt sind;
- ein Paar Schulterregionen (16) an den seitlichen Enden des Laufflächenabschnitts (10), die ein Paar axial äußerster Schulteroberflächen (34) einschließen, die in der axialen Richtung (A) eine Gesamtlaufflächenbreite (TW) definieren, wobei zusätzlich ein ausgewählter Abstand (SD) an seinem Maximum in der axialen Richtung (A) in Bezug auf die Äquatorialebene (EP) durch die axial äußerste Schulteroberfläche (34) definiert ist;
- eine Karkasse (52) innerhalb des Gummimaterials, die sich radial innerhalb des Laufflächenabschnitts (10) befindet, wobei die Karkasse (52) im Querschnitt des Reifens eine konvexe Form definiert, die sich radial nach außen wölbt;
- eine in den Querschnitt des Reifens eingreifende, radial äußerste Laufflächenoberfläche (54), die in den Laufflächenabschnitt (10) eingeschlossen ist, wobei die Laufflächenoberfläche (54) eine konvexe Form im Querschnitt des Reifens definiert, die sich radial nach außen wölbt;
wobei das Verfahren Folgendes umfasst:
- Bilden des Gummimaterials des Laufflächenabschnitts (10) derart, dass eine Dicke des Gummimaterials an ausgewählten Punkten (SP) auf der Laufflächenoberfläche (54) definiert ist, wobei die ausgewählten Punkte (SP) in der axialen Richtung (A) in ausgewählten Abständen (SD) von der Äquatorialebene (EP) liegen, wobei die Dicke durch Abstände (RT) zwischen den konvexen Formen definiert ist, die entlang imaginärer Linien gemessen werden, die sich jeweils in einer Richtung senkrecht zu der konvexen Form der Karkasse (52) und über einen der ausgewählten Punkte (SP) erstrecken;
- wobei
- bei einem ersten ausgewählten Abstand (SD) in der Äquatorialebene (EP) an einem ersten ausgewählten Punkt (SP) ist die Dicke als 100 % definiert;
- bei einem ausgewählten Abstand (SD) von 67 % des maximalen ausgewählten Abstands (SD) ist die Dicke definiert als 118 % bis 167 %, oder 130 % bis 155 %, oder 138 % bis 151 % der Dicke am ersten ausgewählten Punkt (SP); und
- bei einem ausgewählten Abstand (SD) von 83 % des maximalen ausgewählten Abstands (SD) ist die Dicke definiert als 144 % bis 203 %, oder 157 % bis 187 %, oder 169 % bis 182 % der Dicke am ersten ausgewählten Punkt (SP);
wobei das Verfahren **gekennzeichnet ist durch**
- Anpassen der Rille (38), um einen Rillenboden (22) zu definieren, der eine konvexe Form im Querschnitt des Reifens definiert, wobei die konvexe Form der konvexen Form der Laufflächenoberfläche (54) in einem Abstand folgt und die konvexen Formen im Wesentlichen parallel sind.

## Revendications

1. Bandage pneumatique en caoutchouc pour véhicules forestiers, le bandage (100) comprenant :
- une section de bande de roulement en contact avec le sol (10) se prolongeant autour du bandage dans la direction circonférentielle (C) du bandage, dans lequel la section de bande de roulement définit un plan équatorial (EP) imaginaire qui est perpendiculaire à une direction axiale (A) du bandage et passe par une région centrale (40) de la section de bande de roulement, et dans lequel la section de bande de roulement (10) applique une conception de bande de roulement comportant des parties surélevées de la section de bande de roulement (10) qui sont séparées par des rainures (38) ;
- une paire de régions d'épaulement (16) aux extrémités latérales de la section de bande de roulement (10) et comportant une paire de surfaces d'épaulement axialement extérieures (34) définissant, dans la direction axiale (A), une largeur de bande de roulement (TW) globale, dans lequel, de plus, une distance sélectionnée (SD) à son maximum dans la direction axiale (A) par rapport au plan équatorial (EP) est définie par la surface d'épaulement axialement extérieure (34) ;
- une carcasse (52) à l'intérieur du matériau en caoutchouc, située radialement vers l'intérieur de la section de bande de roulement (10), dans lequel la carcasse (52) définit une forme convexe dans une section transversale du bandage, bombée radialement vers l'extérieur ;
- une surface de bande de roulement radialement extérieure en contact avec le sol (54) incluse dans la section de bande de roulement (10), dans lequel la surface de bande de roulement (54) définit une forme convexe dans une section transversale du bandage, bombée radialement vers l'extérieur ;
- dans lequel une épaisseur du matériau en caoutchouc formant la section de bande de roulement (10) et une épaisseur du matériau en caoutchouc au niveau de la rainure (38) sont définies sur des points sélectionnés (SP) sur la surface de bande de roulement (54), les points sélectionnés (SP) étant, dans la direction axiale (A), à des distances sélectionnées (SD) par rapport plan équatorial (EP), dans lequel l'épaisseur au niveau de la section de bande de roulement (10) est définie par les distances (RT) entre les formes convexes, et l'épaisseur au niveau de la rainure (38) est définie comme les proportions des distances (RT) entre les formes convexes, les deux épaisseurs étant mesurées le long de lignes imaginaires se prolongeant chacune dans une direction normale à la forme convexe de la carcasse (52) et via l'un des points sélectionnés (SP) ;
- dans lequel, l'épaisseur du matériau en caoutchouc formant la section de bande de roulement (10) est définie de la manière suivante :
- à une première distance sélectionnée (SD) au niveau du plan équatorial (EP) sur un premier point sélectionné (SP), l'épaisseur est définie comme étant de 100 % ;
- à une distance sélectionnée (SD) de 67 % de la distance sélectionnée (SD) maximale, l'épaisseur est définie comme étant comprise entre 118 % et 167 % de l'épaisseur sur le premier point sélectionné (SP) ; et
- à une distance sélectionnée (SD) de 83 % de la distance sélectionnée (SD) maximale, l'épaisseur est définie comme étant comprise entre 144 % et 203 % de l'épaisseur sur le premier point sélectionné (SP) ; et **caractérisé en ce que** :
- l'épaisseur du matériau en caoutchouc au niveau de la rainure (38) est définie de la manière suivante :
- à la première distance sélectionnée (SD) sur le premier point sélectionné (SP), l'épaisseur est comprise entre 19 % et 35 % de l'épaisseur du matériau en caoutchouc au niveau de la surface de bande de roulement (54) ;
- à la distance sélectionnée (SD) de 67 %, l'épaisseur est comprise entre 26 % et 44 % de l'épaisseur du matériau en caoutchouc au niveau de la surface de bande de roulement (54) ; et
- à la distance sélectionnée (SD) de 83 %, l'épaisseur est comprise entre 33 % et 51 % de l'épaisseur du matériau en caoutchouc au niveau de la surface de bande de roulement (54).

2. Bandage selon la revendication 1, dans lequel
- l'épaisseur du matériau en caoutchouc formant la section de bande de roulement (10) à une distance sélectionnée (SD) de 91 % de la distance sélectionnée (SD) maximale est définie comme étant comprise entre 160 % et 225 % de l'épaisseur au niveau du premier point sélectionné (SP) ; et
- l'épaisseur du matériau en caoutchouc au niveau de la rainure (38) est comprise entre 31 % et 50 % de l'épaisseur du matériau en caoutchouc au niveau de la surface de bande de roulement (54).

3. Bandage selon la revendication 1 ou 2, dans lequel
- l'épaisseur du matériau en caoutchouc formant la section de bande de roulement (10) à une distance sélectionnée (SD) de 100 % de la distance sélectionnée (SD) maximale sur un deuxième point sélectionné (SP) est définie comme étant comprise entre 180 % et 258 % de l'épaisseur au niveau du premier point sélectionné (SP), et
- le deuxième point sélectionné (SP) est représenté par un point imaginaire (62) qui se trouve au-dessus d'un chanfrein ou d'un arrondi (56) à un emplacement où une extension imaginaire (58) de la forme convexe de la surface de bande de roulement (54) atteint la distance sélectionnée (SD) maximale.

4. Bandage selon la revendication 1, dans lequel l'épaisseur du matériau en caoutchouc formant la section de bande de roulement (10) est définie de la manière suivante :
- à la distance sélectionnée (SD) de 67 % de la distance sélectionnée (SD) maximale, l'épaisseur est définie comme étant comprise entre 130 % et 155 %, ou entre 138 % et 151 %, de l'épaisseur au niveau du premier point sélectionné (SP) ; et
- à la distance sélectionnée (SD) de 83 % de la distance sélectionnée (SD) maximale, l'épaisseur est définie comme étant comprise entre 157 % et 187 %, ou entre 169 % et 182 %, de l'épaisseur au niveau du premier point sélectionné (SP).

5. Bandage selon la revendication 2, dans lequel l'épaisseur du matériau en caoutchouc formant la section de bande de roulement (10) à la distance sélectionnée (SD) de 91 % de la distance sélectionnée (SD) maximale, l'épaisseur est définie comme étant comprise entre 173 % et 208 %, ou entre 187 % et 202 %, de l'épaisseur au niveau du premier point sélectionné (SP).

6. Bandage selon la revendication 3, dans lequel l'épaisseur du matériau en caoutchouc formant la section de bande de roulement (10) à la distance sélectionnée (SD) de 100 % de la distance sélectionnée (SD) maximale sur un deuxième point sélectionné (SP), l'épaisseur est définie comme étant comprise entre 196 % et 234 %, ou entre 211 % et 227 %, de l'épaisseur au niveau du premier point sélectionné (SP).

7. Bandage selon l'une quelconque des revendications 1 à 6, dans lequel
- l'épaisseur du matériau en caoutchouc formant la section de bande de roulement (10) est définie de la manière suivante :
- à une distance sélectionnée (SD) de 17 % de la distance sélectionnée (SD) maximale, l'épaisseur est définie comme étant comprise entre 95 % et 120 %, ou entre 97 % et 115 %, ou entre 99 % et 110 %, de l'épaisseur au niveau du premier point sélectionné (SP) ; et/ou
- à une distance sélectionnée (SD) de 33 % de la distance sélectionnée (SD) maximale, l'épaisseur est définie comme étant comprise entre 100 % et 124 %, ou entre 103 % et 120 %, ou entre 105 % et 116 %, de l'épaisseur au niveau du premier point sélectionné (SP) ; et/ou
- à une distance sélectionnée (SD) de 50 % de la distance sélectionnée (SD) maximale, l'épaisseur est définie comme étant comprise entre 105 % et 124 %, ou entre 112 % et 131 %, ou entre 117 % et 129 %, de l'épaisseur au niveau du premier point sélectionné (SP) ; et
- l'épaisseur du matériau en caoutchouc au niveau de la rainure (38) est définie de la manière suivante :
- à la distance sélectionnée (SD) de 17 %, l'épaisseur est comprise entre 19 % et 34 % de l'épaisseur du matériau en caoutchouc au niveau de la surface de bande de roulement (54) ; et
- à la distance sélectionnée (SD) de 33 %, l'épaisseur est comprise entre 24 % et 39 % de l'épaisseur du matériau en caoutchouc au niveau du deuxième point sélectionné (SP) ; et
- à la distance sélectionnée (SD) de 50 %, l'épaisseur est comprise entre 27 % et 42 % de l'épaisseur du matériau en caoutchouc au niveau du troisième point sélectionné (SP).

8. Bandage selon l'une quelconque des revendications 1 à 7, dans lequel l'épaisseur du matériau en caoutchouc au niveau de la rainure (38) est définie de la manière suivante :
- à la première distance sélectionnée (SD) sur le premier point sélectionné (SP), l'épaisseur est comprise entre 21 % et 33 % de l'épaisseur du matériau en caoutchouc au niveau de la surface de bande de roulement (54) ; et/ou
- à la distance sélectionnée (SD) de 17 %, l'épaisseur est comprise entre 21 % et 32 % de l'épaisseur du matériau en caoutchouc au niveau de la surface de bande de roulement (54) ; et/ou
- à la distance sélectionnée (SD) de 33 %, l'épaisseur est comprise entre 26 % et 37 % de l'épaisseur du matériau en caoutchouc au niveau du deuxième point sélectionné (SP) ; et/ou
- à la distance sélectionnée (SD) de 50 %, l'épaisseur est comprise entre 29 % et 41 % de l'épaisseur du matériau en caoutchouc au niveau du troisième point sélectionné (SP) ; et/ou
- à la distance sélectionnée (SD) de 67 %, l'épaisseur est comprise entre 28 % et 41 %, de l'épaisseur du matériau en caoutchouc au niveau de la surface de bande de roulement (54) ; et/ou ;
- à la distance sélectionnée (SD) de 83 %, l'épaisseur est comprise entre 35 % et 48 % de l'épaisseur du matériau en caoutchouc au niveau de la surface de bande de roulement (54) ; et/ou
- à la distance sélectionnée (SD) de 91 %, l'épaisseur est comprise entre 32 % et 47 %, de l'épaisseur du matériau en caoutchouc au niveau de la surface de bande de roulement (54).

9. Bandage selon l'une quelconque des revendications 1 à 8, dans lequel, dans la direction axiale (A), la forme convexe de la surface de bande de roulement (54) diverge progressivement de la forme convexe de la carcasse (52) lorsque la distance par rapport au plan équatorial (EP) augmente.

10. Bandage selon l'une quelconque des revendications 1 à 9, dans lequel le bandage comprend en outre :
- une paire de sections de talon (12) adaptées pour fixer le bandage à une jante de roue, situées sur deux côtés opposés du bandage ; et
- une paire de sections de flanc (14), situées sur deux côtés opposés du bandage, dans lequel chaque section de flanc se prolonge entre la section de talon respective et la section de bande de roulement,
- dans lequel une largeur de flanc (SW) du bandage (100) dans la direction axiale (A) est définie par les extrémités latérales de la paire de sections de flanc (14), et dans lequel le rapport de la largeur de bande de roulement (TW) à la largeur de flanc (SW) est supérieur à 1,0.

11. Bandage selon l'une quelconque des revendications 1 à 10, dans lequel l'épaisseur du matériau en caoutchouc sur le premier point sélectionné (SP) est comprise entre 50 mm et 100 mm, ou plus préférablement entre 60 mm et 75 mm, et/ou le diamètre du bandage dans le plan équatorial (EP) est compris entre 1340 mm et 1525 mm, et/ou la largeur de bande de roulement (TW) est comprise entre 700 mm et 900 mm.

12. Bandage selon l'une quelconque des revendications 1 à 11, dans lequel le bandage (100) est un bandage à plis croisés.

13. Bandage selon l'une quelconque des revendications 1 à 12, dans lequel dans le bandage :
- la section de bande de roulement (10) comporte au moins dans la région d'épaulement (16) des parties surélevées sous forme de crampons (20) entre lesquels les rainures (38) se prolongent latéralement, transversalement ou selon un angle par rapport à la direction circonférentielle (C), les rainures (38) se prolongeant jusqu'à la section de flanc (14) ;
- les crampons (20) se prolongent jusqu'à la région centrale (40) ;
- la section de bande de roulement comprend une rangée de crampons (50) sur chaque côté du plan équatorial (EP) et chaque rangée de crampons se prolonge dans la direction circonférentielle (C) ; et
- chaque rangée de crampons (50) comprend une série des crampons (20) qui sont espacés le long de la direction circonférentielle et définissent les rainures (38) situées entre les crampons.

14. Bandage selon la revendication 13, dans lequel les crampons (20) alternent dans la région centrale (40) de telle sorte que chaque autre crampon est un crampon de l'une des rangées de crampons (50) et chaque autre crampon est un crampon de l'autre rangée de crampons.

15. Procédé de fabrication d'un bandage pneumatique en caoutchouc pour véhicules forestiers, le bandage (100) comprenant :
- une section de bande de roulement en contact avec le sol (10) se prolongeant autour du bandage dans la direction circonférentielle (C) du bandage, dans lequel la section de bande de roulement définit un plan équatorial (EP) imaginaire qui est perpendiculaire à une direction axiale (A) du bandage et passe par une région centrale (40) de la section de bande de roulement, et dans lequel la section de bande de roulement (10) applique une conception de bande de roulement comportant des parties surélevées de la section de bande de roulement (10) qui sont séparées par des rainures (38) ;
- une paire de régions d'épaulement (16) aux extrémités latérales de la section de bande de roulement (10) et comportant une paire de surfaces d'épaulement axialement extérieures (34) définissant, dans la direction axiale (A), une largeur de bande de roulement (TW) globale, dans lequel, de plus, une distance sélectionnée (SD) à son maximum dans la direction axiale (A) par rapport au plan équatorial (EP) est définie par la surface d'épaulement axialement extérieure (34) ;
- une carcasse (52) à l'intérieur du matériau en caoutchouc, située radialement vers l'intérieur de la section de bande de roulement (10), dans lequel la carcasse (52) définit une forme convexe dans une section transversale du bandage, bombée radialement vers l'extérieur ;
- une surface de bande de roulement radialement extérieure en contact avec le sol (54) incluse dans la section de bande de roulement (10), dans lequel la surface de bande de roulement (54) définit une forme convexe dans une section transversale du bandage, bombée radialement vers l'extérieur ;
dans lequel le procédé comprend :
- la formation du matériau en caoutchouc de la section de bande de roulement (10) de telle sorte qu'une épaisseur du matériau en caoutchouc soit définie sur des points sélectionnés (SP) sur la surface de bande de roulement (54), les points sélectionnés (SP) étant, dans la direction axiale (A), à des distances sélectionnées (SD) par rapport plan équatorial (EP), dans lequel l'épaisseur est définie par les distances (RT) entre les formes convexes, mesurées le long de lignes imaginaires s'étendant chacune dans une direction normale à la forme convexe de la carcasse (52) et via l'un des points sélectionnés (SP) ;
- dans lequel
- à une première distance sélectionnée (SD) au niveau du plan équatorial (EP) sur un premier point sélectionné (SP), l'épaisseur est définie comme étant de 100 % ;
- à une distance sélectionnée (SD) de 67 % de la distance sélectionnée (SD) maximale, l'épaisseur est définie comme étant comprise entre 118 % et 167 %, ou entre 130 % et 155 %, ou entre 138 % et 151 %, de l'épaisseur au niveau du premier point sélectionné (SP) ; et
- à une distance sélectionnée (SD) de 83 % de la distance sélectionnée (SD) maximale, l'épaisseur est définie comme étant comprise entre 144 % et 203 %, ou entre 157 % et 187 %, ou entre 169 % et 182 %, de l'épaisseur au niveau du premier point sélectionné (SP) ; le procédé étant **caractérisé par**
l'adaptation de la rainure (38) pour définir un fond de rainure (22) qui définit une forme convexe dans une section transversale du bandage, la forme convexe suivant la forme convexe de la surface de bande de roulement (54) à une distance, les formes convexes étant sensiblement parallèles.
